Europäisches Patentamt

European Patent Office

Office européen des brevets

(19)

(11) EP 0 761 897 A1

(12) # EUROPEAN PATENT APPLICATION

(43) Date of publication:
12.03.1997 Bulletin 1997/11

(51) Int Cl.$^6$: **E04B 5/10**, B62D 25/20

(21) Application number: 96660041.3

(22) Date of filing: 14.08.1996

(84) Designated Contracting States:
DE FR GB SE

(30) Priority: 29.08.1995 FI 954056

(71) Applicant: VR Osakeyhtiö
00101 Helsinki (FI)

(72) Inventors:
• Koivumäki, Seppo
04260 Kerava (FI)

• Helander, Pertti
70870 Kuopio (FI)
• Jaakola, Eero
76850 Naarajärvi (FI)

(74) Representative: Hovi, Simo
Seppo Laine Oy
Lönnrotinkatu 19 A
00120 Helsinki (FI)

(54) **Cellular floor structure**

(57)    The present invention relates to a cellular floor structure comprising two skin plates (1) spaced at a distance from each other and connected to each other by a sheet structure (2, 4) herein called a waist web plate. According to the invention, the skin plate (1) is curved over at least one area toward the waist web structure (2, 4) and the waist web structure (2, 4) is formed so as to support the skin plate (1) in a direction perpendicular to the skin plate surface and in at least one direction orthogonal to the edge (7) of the curved area. Most advantageously, the skin plate is curved in the form of a catenary.

Fig. 1

## Description

The invention relates to a floor structure according to the preamble of claim 1, said structure being comprised of two skin plates which are spaced at a distance from each other and connected to each other by means of a sheet metal structure called the waist web plate in the context of the present invention.

A variety of different cellular floor structures are known and used in locations, where the mass of the structure itself is desiredly minimized. Hence, typical uses are in, e.g., vehicles and ships. While cellular structures are conventionally made into composite structures, in bulk carriers such as ships and trains, these structures are normally made from steel or aluminium. The skin plates of the cellular structure are attached to the waist web plate by, e.g., welding, adhesive bonding or mechanically using screws, rivets and similar fixing means. A particularly advantageous jointing method in metal constructions is laser welding applied over the entire length of the narrow seam between the skin plates and waist web plates. The amount of heat imported to the structure during laser welding is well-controlled, thus reducing deformations caused by thermally induced stresses in such structures. The cellular structure can be adapted into a load-bearing slab-like floor structure. The cellular floor can be braced into a part of a vehicle's framework with the help of, e.g., supports spaced at certain distances from each other.

In the above-described applications, the top skin plate of the cellular floor slab bears a surface load caused by a vertically acting force. As a whole, the slab extending over a span is subjected to shear and bend stresses imposed by the total surface load. In simple terms of production, the floor would be easiest made by spacing the two skin plates vertically at a distance from each other as necessary to achieve the required bending stiffness and then connecting the skin plates to each other by the number of waist webs necessary to achieve the required shear strength. However, such a structure has properties that prevent optimal dimensioning of the floor. The thin top skin plate easily yields under bending stresses induced by a perpendicular load, resulting in buckling that may cause unexpected failure of the structure. Under flexure, one of the skin plates is always subjected in the plane of the plate to a compressive stress, which the thin skin plate can satisfactorily endure only at a small distance from a support juncture intended to prevent perpendicular buckling of the skin plate. Moreover, the skin plate must have a sufficient thickness to bear with a reasonable safety margin such point loads that act directly on the plate surface. While this requirement not necessarily poses a problem in steel structures, point loads can puncture a skin plate made of, e. g., aluminium or fiber-reinforced composite.

Due to the mentioned reasons, a floor structure dimensioned according to the conventional design rules outlined above must generally be made so that its skin plate is relatively thick, or alternatively, provided with support ribs spaced at a close distance. Also skin plates with different groovings are frequently used. Such a grooved skin plate improves the bending stiffness of the plate provided that the grooves are aligned to run in the direction of the span. However, the bending stiffness of the skin plate in a direction perpendicular to the grooves is lost almost entirely. Furthermore, the grooved surface plate must be designed so stiff as to make the compressive-stress-bearing area at the upper part of the grooves as well as the tensile-stress-bearing area at the lower part of the grooves sufficiently large to take all the loads acting over the span between the floor supports.

Conventionally, between the top and bottom skin plates are also placed different kinds of fillers serving to prevent buckling. The filler also acts as a structural member bearing shear stresses. However, the use of fillers between the top and bottom skin structures causes problems due to their heavy weight and high price of fillers, particularly in conjunction with thicker floor slabs.

It is an object of the present invention to achieve a cellular floor structure capable of using unconventionally thin skin plates.

The goal of the invention is accomplished by means of a floor structure characterized in that the floor is formed from at least one top skin strip, whose two opposite edges are attached to a waist web structure capable of supporting the skin strip in a direction perpendicular to the strip surface and in a direction orthogonal to that direction, and that said top skin strip is made concave toward the direction of said waist web structure over its area remaining between said supported strip edges.

More specifically, the cellular floor structure according to the invention is characterized by what is stated in the characterizing part of claim 1.

The invention offers significant benefits.

The most important benefit offered by the invention is the low specific weight of the floor structure as compared with conventional floors having the same nominal loading per unit area. Notwithstanding the relatively large number of members in the floor structure, its manufacture becomes economical, because in most embodiments of the invention the strip/web juncture seams can be made for their major lengths by welding in the downhand position. The structure comprises standard-dimension members only, making its production easy to automate. The manufacture can be carried out using modern high-efficiency welding methods such as laser welding or plasma welding with conventional or submerged arc. Obviously, a plurality of other manufacturing methods are suitable. While the invention was principally conceived for steel structures, it is as well applicable to, e.g., aluminium or composite structures.

In the following the invention is described in greater detail by making reference to the appended drawings in which

Figure 1 is a schematic cross section of an embodiment according to the invention;

Figure 2 is a cross section of another embodiment modified from that shown in Fig. 1;

Figures 3 and 4 illustrate the distribution of stresses in a structure according to the invention;

Figure 5 is perspective view of the structure shown in Fig. 1;

Figure 6 is cross section of the structure shown in Fig. 5 here using a modified stiffener of the structure; and

Figures 7 - 11 show cross sections of alternative embodiments according to the invention.

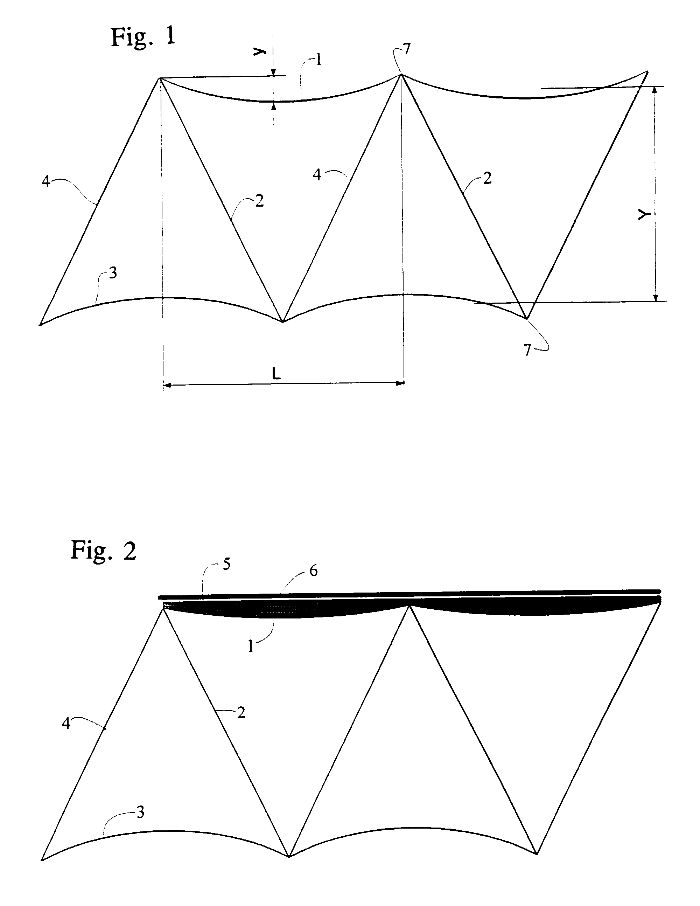

Referring to Fig. 1, the embodiment according to the invention shown therein is comprised of elongated skin strips 1, 3 with a curved cross section and of straight elongated waist web strips 2, 4. The concavity of the curved skin strips 1, 3 is toward the interior of the cellular structure. To each juncture seam between the skin strips 1, 3 are joined two waist web strips 2, 4 so that a triangular prismatic section is formed by each interjoined triad of one skin strip 1, 3 and two adjacent waist web strips 2, 4. In the embodiment shown herein, the cross section of the cellular floor structure is symmetrical, whereby either of its outer surfaces can be used as the load-bearing top surface. In cases requiring a flat floor surface, the top surface can be made level by means of a suitable levelling compound 5 as shown in Fig. 2. The levelling compound may further be covered with a liner plate 6 of a suitable material, or alternatively, coated with another surfacing layer.

In the cellular floor structure according to the invention, the load-bearing top skin plate 1 is shaped so that, when attached supported by the waist web strips 2, 4, its cross section is advantageously curved over the span extended between the support lines which are formed by ridge-like joined edges of the supporting webs 2, 4. In Fig. 1, the distance between the support lines is denoted by reference letter L, while the deviation of the top skin plate 1 from the straight line drawn between the supports, that is, the sag, is denoted by reference letter y.

At the linear seam between the waist web plates 2, 4 and the top skin plate 1, the top skin plate is contoured into a linear fold 7, whereby the continuously curved shape of the plate cross section between the linear seams can add significantly to the compressive strength of the plate 1 in the longitudinal direction along the linear seams, that is, orthogonally to the cross section shown in Fig. 1. Typically, a straight sheet steel plate in strength computations is assumed to bear a compressive stress equal to the yield stress only approx. 10-fold the sheet thickness apart from a support which is placed perpendicular to the plate surface. When provided with the concave curved shape shown in Fig. 1, the permissible loading distance of plate can be extended up to hundredfold the plate thickness. Additionally stiffened by a levelling compound 5 adhering over its entire area to the top skin plate 1 as shown in Fig. 2, the permissible span between the top skin plate supports may further be extended by another order of magnitude.

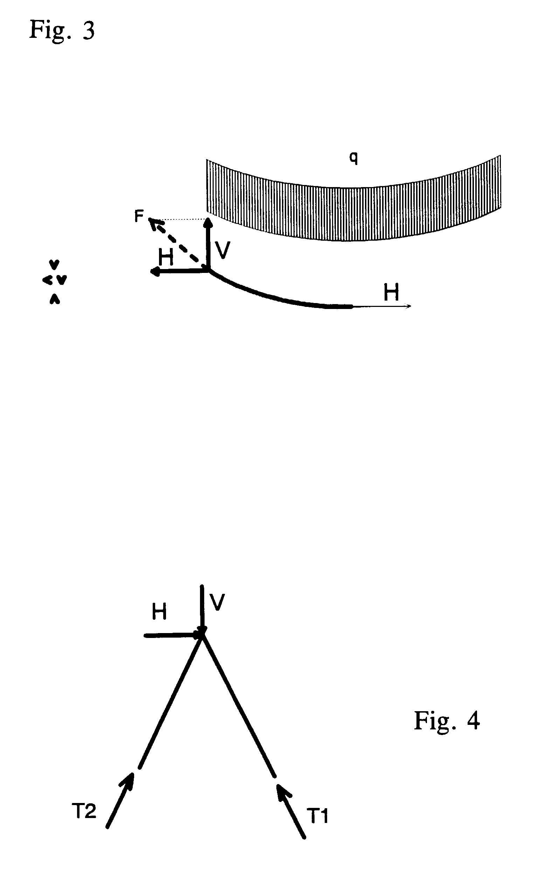

In the following, the behaviour of the above-described structure under load is examined with reference to Figs. 3 and 4. When the cross section of the top skin plate is assumed to be curved approximately to the form of a catenary, that is, a rope of constant weigh per unit length sagging between two supports described by the equation

$$y = qL^2/8H,$$

the top skin plate bears a load, which is acting approximately orthogonal to the plate surface and is homogeneously distributed over the surface, principally by a tensile force F which is tangential to the plate surface (Fig. 3).

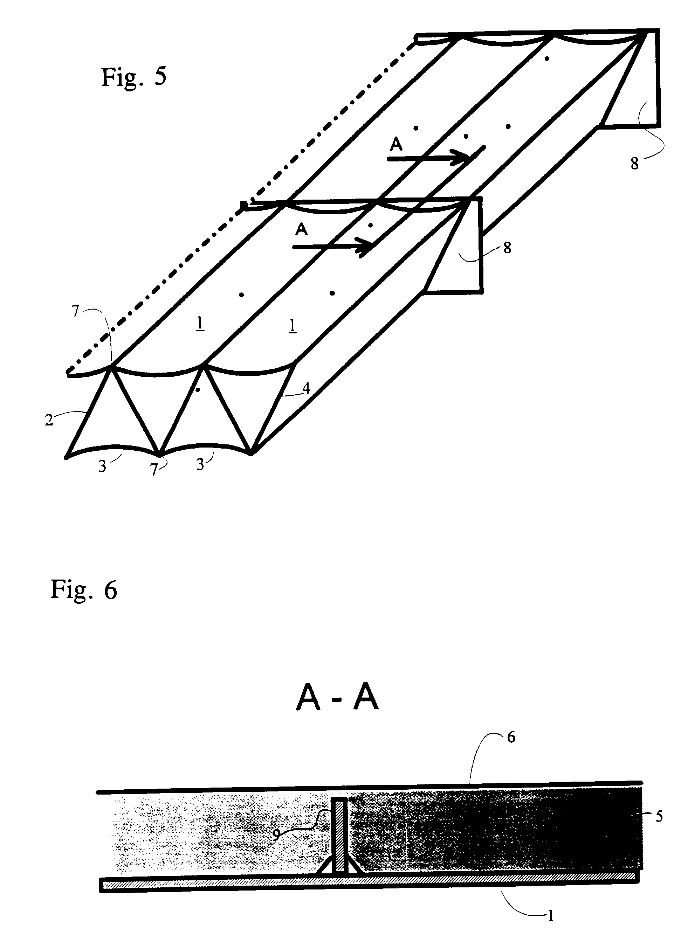

Accordingly, a vertical load acting on a single sag of the top skin plate induces a significant unsymmetrical horizontal load component H stressing the support which is attached to the highest point of the skin plate. Such a horizontal load can be supported by the method shown in the diagram using inclined waist web plates, whereby the sum of the unequal backing forces T1 and T2 stressing the waist web plates provides the required reaction force to the loading force F. The inclined waist web plates with the bottom and top skin plates form a cellular combination of several prismatic box sections running parallel to the plate juncture edges. All these box sections exhibit a significantly high torsional and bending stiffness, whereby the support edge formed as part of the box section is capable of bearing high vertical and horizontal forces. Advantageously, the ends of the adjacent box sections are fixed to each other by, e.g., a plate 8 which is placed in the fashion of Fig. 5 transversely to the longitudinal center axis of the box section, or by other similar structure capable of preventing the twisting of the box sections with respect to each other.

A curved top skin plate 1 as such performs poorly under compressive and tensile stresses acting in a direction orthogonal to the seams 7 of the waist web plates 2, 4 and the top/bottom skin plates 1, 3. Use of the transverse bracing plates 8 gives the structure as a whole a high strength under transverse stresses. Instead of using the transverse bracing plates 8, the transverse stiffness of the top/bottom skin plates 1, 3 can be increased by, e.g., simple stiffening ribs 9 cut to the shape of the contoured top skin plate. Such a stiffening method is shown in Fig. 6. In this embodiment, the stiffening rib 9 is welded onto the top skin plate and the levelling compound 5 is cast onto the skin plate. Finally, the levelling compound 5 is covered by a liner plate 6.

Using the above-described techniques, the top skin plate 1 can be rendered to endure high point loads by levelling the recesses of the top skin plates with a levelling structure 5 comprising a surface layer or liner plate 6 capable of taking high point loads and placing a stiff or resilient filler 5 between the liner plate 6 and the top skin plate 1. The filler 5 distributes loads imposed on a small area over a larger area and permits the top skin plate 1 to retain its cross section at the loading force in the form of a catenary. The filler 5 may be, e.g., reinforced polymer compound blended with a filler. Hard and wear-resistant stone aggregates may most advantageously be used as the filler. Obviously, the filler may also be a composite material containing, e.g., rubber, polymer, concrete, wood, etc. Correspondingly, while the liner plate may be selected from a large group of suitable materials, the liner plate may be omitted if the levelling compound 5 in itself is of a sufficiently hard material.

While the levelling layer 5 can best stabilize the shape of the top skin plate 1 when the stiffness of the layer is significantly high and the levelling compound is well adhered to the top skin plate 1, also a filler which is nonadhered to the top skin plate, but is sufficiently compliant with the form of the top skin plate 1, can perform essentially in the desired manner. Obviously, the levelling compound 5 can be entirely omitted if the load imposed on the floor surface is such that inherently complies with the shape of the floor surface. Such loads are provided by, e.g., different fluids, pulverized and granular materials and other loads assuming the shape of the floor surface. Floors particularly intended for wheeled vehicles may quite often serve without any levelling, because in such vehicles the wheel itself typically is inherently compliant with the local shape of the undulated floor surface.

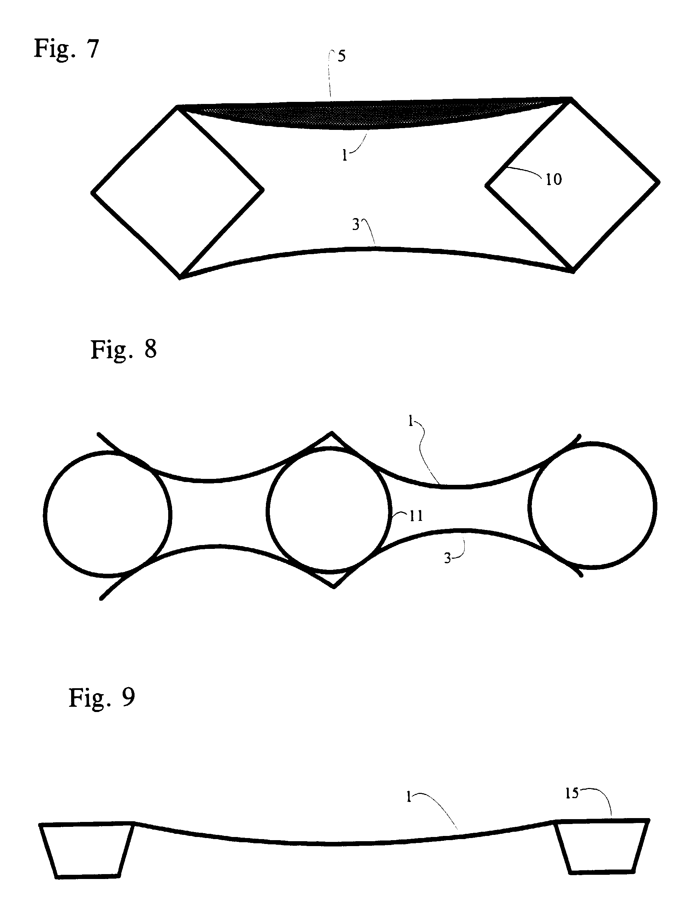

In Figs. 7 - 11 are shown alternative embodiments of the invention.

Besides the above-described combination of two inclined waist web plates, the function of the waist web may alternatively be effected by using parallel tubes or beams to which at least one top skin plate is attached by seams running parallel with the tubes/beams. Such structural designs are illustrated in Figs. 7 - 9. In Fig. 7, the waist web is shown implemented by means of square-section tubes 10 and the top skin plates 1, 3 are attached to the corner edges of the tubes 10. The embodiment of Fig. 7 uses a levelling compound 5. The benefit of this design is a reduced number of welding seams and simpler structure. Further, this structure may have longer transverse spans of the top/bottom skin plates 1, 3 and can use the above-described structures as the transverse supporting stiffeners. In some cases, a disadvantage of this structure is its lower compressive strength in a direction perpendicular to the top surface (for vertical loads), because the strength of the structure is determined by the diagonal compressive strength of the square-section tube used. However, the strength of the structure to compressive stresses can be improved significantly by adding transverse supports and when required using a tube whose corner edges are connected by a bracing plate for those parts that remain inside the floor structure.

Referring to Fig. 8, the waist web structure shown therein is made from circular-section tubes 11 and the top skin plate 1, 3 is provided with an undulating shape. For other details, this structure is much akin to the structure shown in Fig. 7. When using the design of Fig. 8 having the top skin plate 1 shaped into a ridge at the tubes 11, a leveller compound is advantageously used. Obviously, the top skin plate can be shaped compliant with the shape of the tubes. Alternatively, the top skin plate can be made from strips attached at their edges to the tubes 11.

Referring to Fig. 9, the embodiment shown therein has the curved top skin plate 1 attached to tubes or box sections 15. To render this design capable of bearing a vertical load imposed on the top skin plate 1, the tubes/ box sections must be fixed in place, besides in the vertical direction, also in the horizontal direction, and their twisting must be prevented. This embodiment offers a wide selection of variations by using different designs of the member 15 attached to the edges of the top skin plate.

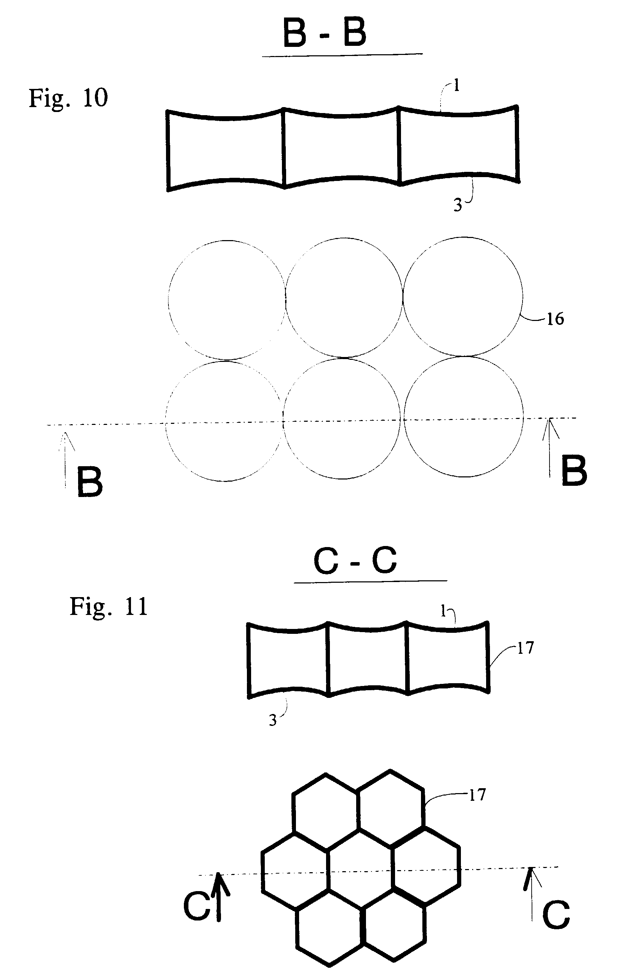

Furthermore, the structure according to the invention may be implemented by shaping the waist webs into a cellular section as shown in Figs. 10 and 11. In these diagrams, the cellular structure is shown in a longitudinally sectional view and a cross-sectional view taken along line B-B (Fig. 10) and line C-C (Fig. 11), respectively. The cellular web structure may be formed from tubes 16 attached to each other or from a honeycomb section 17 made by alternative techniques. The cross section of the tubes 16 or the honeycomb section 17, respectively, may be varied, and the top skin plate can be implemented as a plate designed weldable onto the honeycomb web structure, whereby the top skin plate is provided with indents compatible with the shape of the honeycomb structure cells, or alternatively, smaller cuplike pieces of the top skin plate can be used that are attached in the openings of the honeycomb structure.

As is evident from the above description, the top skin plate of the cellular structure according to the invention may be fabricated into a contiguous plate which is appropriately given an undulated or folded shape. Alternatively, the structure can be made from separate strips designed to fit into the spans between the waist web plates. Correspondingly, the waist web structure can be made from separate sheet strips, tubes or undulated plate. The essential requirement herein is that the waist web structure must be capable of supporting the curved part of the top skin plate in a direction perpendicular to the plate surface and in at least one direction orthogonal to the edge of the curved part of the top skin plate. In a floor structure, said directions are the vertical direction and a direction orthogonal thereto. The curvature of the top skin plate can be monotonous or non-monotonous over the span between the waist web members.

## Claims

1. A cellular floor structure comprising at least one skin plate (1) and a waist web structure (2, 4) attached thereto,
   **characterized** in that

   - the skin plate (1) curves on at least one area toward the waist web structure, and

   - the waist web structure (2, 4) is designed to support the skin plate (1) in a direction perpendicular to the skin plate surface and in at least one direction orthogonal to the edge (7) of the curved part of the skin plate.

2. A cellular floor structure as defined in claim 1, **characterized** in that the structure comprises

   - a first undulatingly folded skin plate (1) and a second, identical skin plate (3) adapted at a distance from the first skin plate, and

   - waist web plates (2, 4) adapted between the skin plates (1, 3) so that to each of the crests (7) of the undulation on each skin plate (1, 3) are attached two waist web plates (2, 4) at their one edges, while the opposite edges of the waist web plates are attached to two separate crests (7) of the undulation on the opposite skin plate (1, 3).

3. A cellular floor structure as defined in any of the foregoing claims, **characterized** by at least one transverse bracing plate (8) attached to the ends of the elongated longitudinal cells formed by the skin plates (1, 3) and the waist web plates (2, 4).

4. A cellular floor structure as defined in any of the foregoing claims, **characterized** by having the waist web structure formed from square-section tubes (10).

5. A cellular floor structure as defined in any of the foregoing claims, **characterized** by having the waist web structure formed from circular-section tubes (11).

6. A cellular floor structure as defined in any of the foregoing claims, **characterized** by having the waist web structure formed from a cellular structure comprising tubes (16) attached to each other.

7. A cellular floor structure as defined in any of the foregoing claims, **characterized** by having the waist web structure formed from a honeycomb structure (17).

8. A cellular floor structure as defined in any of the foregoing claims, **characterized** by having the skin plate (1, 3) shaped into a contiguous undulated plate.

9. A cellular floor structure as defined in any of the foregoing claims, **characterized** by having the skin plate (1, 3) comprised of elongated sheet strips of a curved cross section attached to the waist web structure.

10. A cellular floor structure as defined in any of the foregoing claims, **characterized** in that the curvature of the skin plate (1, 3) is monotonous between adjacent crests supported by the waist web structures and that the plate curvature is determined by a catenary.

11. A cellular floor structure as defined in any of the foregoing claims, **characterized** by a levelling composition (5, 6) applied onto the skin plate (1) so as to level out the concave parts of the plate (1).

12. A cellular floor structure as defined in any of the foregoing claims, **characterized** by the levelling composition being comprised of a filler material (5) and a liner plate (6) adapted thereon.

EP 0 761 897 A1

Fig. 1

Fig. 2

Fig. 3

Fig. 4

Fig. 5

Fig. 6

A - A

Fig. 7

Fig. 8

Fig. 9

## B - B

Fig. 10

## C - C

Fig. 11

**European Patent Office**

**EUROPEAN SEARCH REPORT**

Application Number

EP 96 66 0041

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 646 521 (METRO MACHINE CORP. ET AL.) | 1,8,9 | E04B5/10 |
| A | | 2,10 | B62D25/20 |
| | * abstract; figures 13,31-44 * | | |
| | --- | | |
| X | FR-A-988 714 (NATIONAL STEEL CORP.) | 1,11 | |
| Y | | 3 | |
| | * page 4, column 1, paragraph 3 - page 4, column 2; figures * | | |
| | --- | | |
| X | GB-A-577 512 (STEEL CEILINGS LTD. ET AL.) | 1 | |
| A | | 2 | |
| | * figures 1-3 * | | |
| | --- | | |
| X | US-A-1 986 998 (E. W. BURGESS ET AL.) | 1 | |
| | * figures * | | |
| | --- | | |
| X | FR-A-355 174 (WILSON) | 1 | |
| A | | 2,11 | |
| | * the whole document * | | |
| | --- | | |
| X | US-A-3 304 680 (B. F. BIRDWELL) | 1 | TECHNICAL FIELDS SEARCHED (Int.Cl.6) |
| A | | 2 | E04B |
| | * figures 1,2 * | | B63B |
| | --- | | B62D |
| Y | GB-A-2 153 868 (VESTAL) | 3 | E04C |
| A | | 1 | |
| | * abstract; figures * | | |
| | --- | | |
| A | GB-A-1 007 351 (HENDRICK) | 1,10 | |
| | * figures * | | |
| | --- | | |
| A | US-A-3 984 961 (CHIEGER ET AL.) | 1,2 | |
| | * the whole document * | | |
| | --- | | |
| A | FR-A-752 907 (MESLAND) | 1,2 | |
| | * figures * | | |
| | --- | | |
| | -/-- | | |

The present search report has been drawn up for all claims

| Place of search | Date of completion of the search | Examiner |
|---|---|---|
| THE HAGUE | 13 December 1996 | Righetti, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 96 66 0041

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | LU-A-65 096 (WELZ)<br><br>* figures *<br>--- | 1,2,4,8,9 | |
| A | EP-A-0 001 176 (C. HUDSON LTD.)<br>* abstract; figures *<br>--- | 1,2,4-6 | |
| A | EP-A-0 260 200 (ALSTHOM)<br>* abstract; figures 1A,7A *<br>--- | 1,7 | |
| A | US-A-2 955 687 (M. C. SEIM)<br>* figures *<br>--- | 1 | |
| A | DE-A-28 45 057 (WACKENHUT)<br>* figures *<br>----- | 1 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 13 December 1996 | Righetti, R |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document